# EUROPEAN PATENT APPLICATION

(11) **EP 2 945 108 A1**
(43) Date of publication of application: **18.11.2015**
(21) Application number: 14305701.6
(22) Date of filing: 13.05.2014
(51) Int. Cl.: G06Q 10/10

(54) **Method and apparatus for handling digital assets in an assets-based workflow**

(71) Applicant: Thomson Licensing, 92130 Issy-les-Moulineaux (FR)
(72) Inventor: Thibaut, Olivier, London, W4 3EQ (GB); Cole, Ben, Vancouver, British Columbia V6B 1B7 (CA); Ricklefs, Hannes, Richmond, Surrey TW107EH (GB)
(74) Representative: Schmidt-Uhlig, Thomas

(57) **Abstract**

A method for handling digital assets and an apparatus (20) configured to perform the method are described. The apparatus (20) comprises an asset analyzer (22) for analyzing (10) a digital asset to determine context and attributes of the digital asset. A comparator (23) then compares (11) the determined context and attributes with tags, which comprise information on context, attributes, and actions. Finally, an action unit (24) performs (13) an action on the digital asset specified by the tag in case the context and an attribute of the digital asset match (12) the context and an attribute of a tag.

## Description

### FIELD OF THE INVENTION

The invention relates to a method and an apparatus for handling digital assets in an assets-based workflow, and more specifically to a method and an apparatus for contextual tagging and decision-making suitable for workflows involving digital assets distributed across physically distant facilities.

### BACKGROUND OF THE INVENTION

In the field of distributed workflows or production pipelines there often is the need to synchronize digital assets between physically distant facilities. The assets are assumed to be large, i.e. Gigabytes or more, and need to be accessed by onsite applications. For example, in the case of computer graphics, visual effects (VFX) or post-production, huge amounts of assets need to be provided to applications such as Autodesk Maya, Foundry Nuke, etc. These assets describe the geometry of the 3D scene (models), the properties of its surface (textures, shaders), the motion of its components (animation curves, transformation caches, rigs, camera information), video data, and so on.

One existing approach is to keep the entire asset base in sync, using for example cron/rsync in Unix-based systems. However, this is not practical due to the size of VFX assets, the required bandwidth and the time this takes. Furthermore, this approach is inefficient, as more than the assets that are actually required are synchronized.

A further approach consists in using cloud hosting. However, the same concerns about asset size and latency apply. In addition, asset security becomes an issue if third-party cloud services are used.

### SUMMARY OF THE INVENTION

It is an object of the present invention to propose a solution for handling digital assets in an assets-based workflow, which enables the distribution of a company's output of assets to specific locations.

According to the invention, a method for handling digital assets comprises:
- analyzing a digital asset to determine context and attributes of the digital asset;
- comparing the determined context and attributes with tags, the tags comprising information on context, attributes, and actions; and
- in case the context and an attribute of the digital asset match the context and an attribute of a tag, performing an action on the digital asset specified by the tag.

Accordingly, an apparatus configured to handle digital assets comprises:
- an asset analyzer configured to analyze a digital asset to determine context and attributes of the digital asset;
- a comparator configured to compare the determined context and attributes with tags, the tags comprising information on context, attributes, and actions; and
- an action unit configured to perform an action on the digital asset specified by the tag in case the context and an attribute of the digital asset match the context and an attribute of a tag.

Also, a computer readable storage medium has stored therein instructions enabling handling digital assets, which when executed by a computer, cause the computer to:
- analyze a digital asset to determine context and attributes of the digital asset;
- compare the determined context and attributes with tags, the tags comprising information on context, attributes, and actions; and
- in case the context and an attribute of the digital asset match the context and an attribute of a tag, perform an action on the digital asset specified by the tag.

The proposed approach reduces the bandwidth required to enable sharing work between distant sites, as generally only subsets of available digital assets, such as video data, scene models, object surface property data, motion data of scene components, or software components, will undergo the specified actions, e.g. the distribution to distant facilities. These subsets can be a reasonably close match to the strict minimum subset required for the distributed workflow to function. As a consequence of the above latency introduced by sharing the workflow is reduced. Also, the disk storage space required in each distant site is reduced, which results in smaller infrastructure costs. The tag-based approach uses generic key-value configuration, which can provide great flexibility when integrating within a workflow. Configuration keys correspond to digital assets attribute names, so users do not need to be technically inclined to understand configuration.

In one embodiment the proposed solution is implemented as a system that can be used to categorize digital assets of any kind, check them against a flexible contextual configuration, and use matching configuration items to make a decision. This system is either used as a stand-alone service or as middle-ware, for example to synchronize newly created assets between sites, or to trigger specific notifications. It can be used as part of a process, or to offer powerful decision-making mechanism as part of an event-driven system.

In one embodiment the action comprises providing a digital asset to a local or remote destination or blocking transmission of a digital asset to a local or remote destination. One purpose of the proposed solution is to make the required digital assets available at specific destinations. However, sometimes it might be necessary to block specific digital assets, e.g. because they are already available at the destination, due to security concerns, or simply because they are actually not required at the destination but would be made available due to more general tags of a given configuration. A blocking action prevents the unnecessary transmission of digital assets.

In one embodiment the context represents a project, e.g. a film project or a software project, and comprises one or more descriptors for the project. Film projects or software projects are typically distributed over multiple production sites and thus greatly benefit from the proposed solution.

In one embodiment the attributes comprise information about at least one of category of the asset, type of the asset, creator of the asset, storage location of the asset, and authorized user of the asset. Some or all of this information is typically available and enables a rather fine adjustment of the selection of digital assets that shall undergo the specified action.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims.

### BRIEF DESCRIPTION OF THE DRAWINGS

- Fig. 1: schematically illustrates a method according to the invention for tagging and decision-making for a digital assets-based workflow;
- Fig. 2: schematically depicts an apparatus configured to perform a method according to the invention;
- Fig. 3: illustrates a generic asset release process;
- Fig. 4: shows an exemplary implementation of rules for a tagging mechanism;
- Fig. 5: illustrates associations for various categories of assets.

### DETAILED DESCRIPTION OF PREFERED EMBODIMENTS

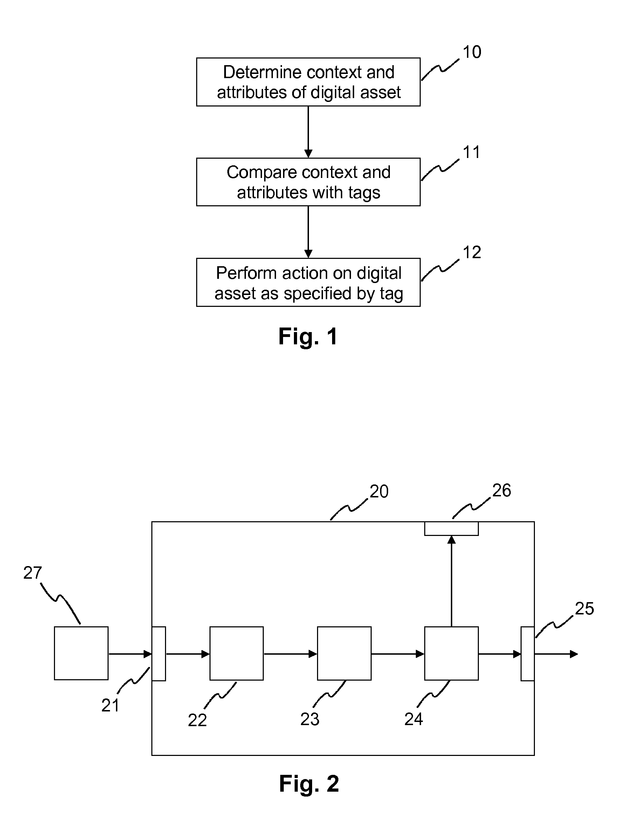

A method according to the invention for handling digital assets is schematically illustrated in Fig. 1. After analyzing 10 a digital asset to determine context and attributes of the digital asset, the determined context and attributes are compared 11 with tags. The tags comprise information on context, attributes, and actions. In case a check 12 yields that the context and an attribute of the digital asset match the context and an attribute of a tag, an action specified by the tag is performed 13 on the digital asset.

Fig. 2 depicts an apparatus 20 configured to perform a method according to the invention. The apparatus 20 comprises an input 21 for receiving a digital asset, e.g. from a network or a storage system 27. An asset analyzer 22 analyzes 10 the digital asset to determine context and attributes of the digital asset. A comparator 23 then compares 11 the determined context and attributes with tags, which comprise information on context, attributes, and actions. In case the context and an attribute of the digital asset match 12 the context and an attribute of a tag, an action unit 24 performs 13 an action on the digital asset specified by the tag. For this purpose the apparatus 20 comprises an output 25 for transmitting the digital asset to a remote site or for outputting action requests and/or a user interface 26 for informing a user about actions that are performed or initiated. The various units 22, 23, 24 of the apparatus 20 may likewise be partially or fully combined into a single unit. Also, they are either implemented as dedicated hardware or as software running on a processor.

In the following the invention shall be explained in more detail with reference to a VFX workflow. Of course, the proposed approach is likewise applicable to other use-cases, e.g. as a component of a notification system.

The proposed approach makes use of several main components:

### 1) A generic asset reader

This reader extracts pre-determined properties of assets, so that these properties can be compared with 'tags' later on. The reader is easily extensible, so that the system can accept a variety of assets as inputs. The asset properties are divided in two categories: attributes and context. How this division occurs is determined by the reader implementation for the type of the asset. The context is a literal short-hand for the asset attributes that can be used to retrieve a limited set of tags more efficiently.

### 2) A tag-to-asset matching mechanism

The tags are made of three sub-components: the attributes, the context, and the action. The attributes in the configuration can be literal or regular expression versions of the asset attributes. The asset representation that came out of the asset reader is compared with the tags whose context is identical to that of the asset. Each tag is then matched against the asset. If the tag matches the asset, it is retained and will be passed on to the Decision Engine. Otherwise it is ignored.

### 3) A decision engine

The matching tags' actions are given to the decision engine. The actions are resolved through logical operations into a decision. As for the asset reader, the actions can vary depending on the assets, and the decision engine can be extended to support new actions.

### 4) A templating mechanism

Complex workflows can require many different types of digital assets, which need to be actioned collaboratively to obtain a result. To solve this problem 'template tags' are grouped in 'templates'. Template tags differ from tags in that they do not have a context and in that their actions may include placeholders. When the system is configured, templates are 'applied' on contexts, which means new tags are created from the template tags, using a context and action replacements supplied by users of the system.

### 5) A tag-to-tag matching mechanism

As the configuration grows in size, it is helpful for the system's maintainers that it remains as simple as possible. For this purpose, tags can be compared to each other when added to the system, so that redundant tags are removed. These redundancy tests are similar to tag-to-asset matches, although they serve a different purpose.

To give a more specific example, the proposed solution can be used as part of an asset release workflow. Using the creation of a new asset as an event, the asset can be compared with tags of a configuration for its context. Syncing actions are defined for the tags, so that this asset's data and dependencies are transferred to other sites needing it.

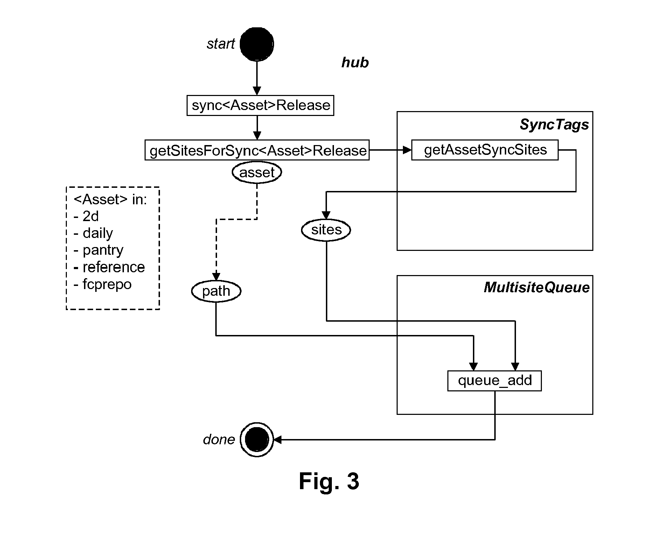

The diagram in Fig. 3 illustrates a generic asset release process. In this example, the Hub service, which is one of a number of available asset management services, triggers the release. The tagging mechanism itself is accessed through a service named 'SyncTags'. This service takes the asset as an input, and returns 'sites' as the decision result. This value represents the physical locations the asset is needed in, and serves as an input to another service, 'MultisiteQueue', which is in charge of transferring the asset data.

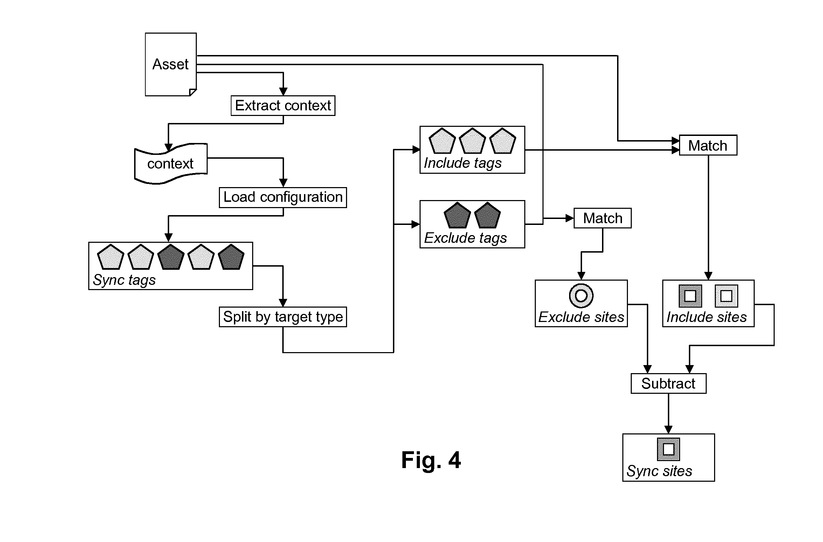

Fig. 4 shows an exemplary implementation of rules for the SyncTags service mentioned above. The rules are loaded by reading the asset's context and using it to load up relevant tags. Then all the tags are matched against the asset. Subsequently, the tag's rules are used to make the decision. The diagram illustrates how rules can be implemented. In the case of SyncTags, inclusion and exclusion rules are defined, adding up the values of the inclusion rules, then subtracting the values of the exclusion rules to obtain a final result.

In one embodiment the assets context is represented using three descriptors: job, scene, and shot. Each of these holds an arbitrary string value. The context in this case represents the film project an asset belongs to, known as 'job', and, if applicable, the specific 'scene' and 'shot' of assets. Scene and shots are common film-industry terms describing the film's time line. A film is made of a number of scenes, each of them broken down in a number of shots. A similar approach is suitable for software projects, where a program is composed of a number of components.

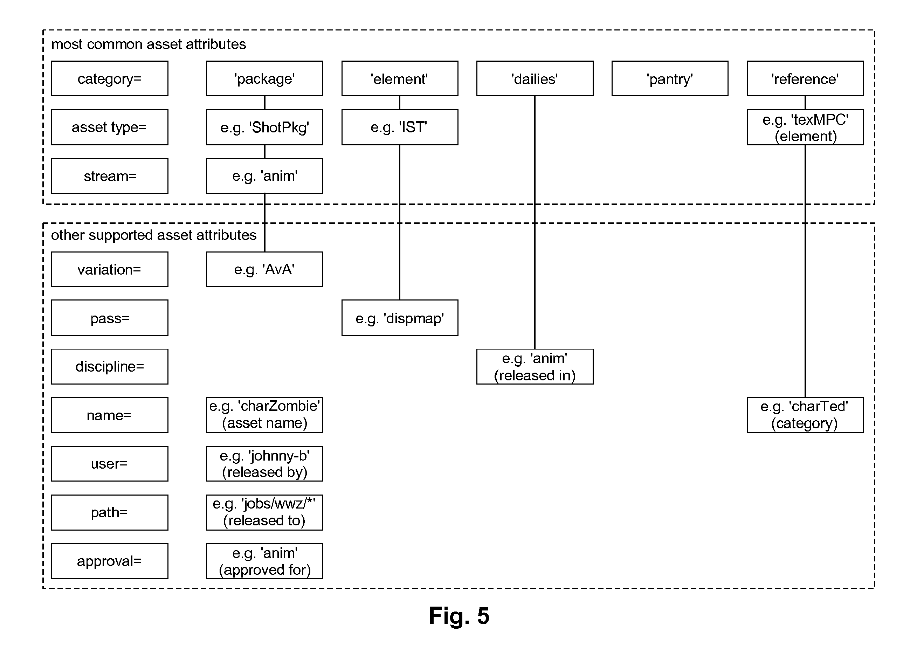

The assets themselves have a number of attributes, which are not necessarily the same across the various asset management systems. However, this is actually not a problem. It is sufficient to define associations of attributes for each asset management system. The diagram in Fig. 5 illustrates the associations for a number of categories of assets, i.e. the asset management system they belong to.

To give an example, consider the following use-case. A job named 'foo' exists in "Facility 1". On this particular job, all 'camera'-type assets are to be sent to "Facility 2". Hence the following tag is created:

**Context**

| | | |
|---|---|---|
| job | scene | shot |
| "foo" | | |

**Attributes**

| | | | | | |
|---|---|---|---|---|---|
| category | asset_type | name | user | path | approval |
| package | "camera" | | | | |

**Action**

| type | target |
|---|---|
| Sync to | "Facility 2" |

As can be seen, many fields in the Tag remain blank. This is rather useful, as it means that there is no need to care about the value of these fields in the asset. This enables one tag to match a large number of potential assets, thus keeping configuration light and simple. Conversely, it means an asset may match multiple tags over separate properties, hence multiple actions can be taken when one such asset is released.

In this specific example, the Tag will match any asset of category 'package', meaning it was created by a Packaging asset management system. Its type is 'camera', meaning it contains information describing a virtual camera in a 3D environment. No values are specified for 'name', i.e. the name given to this camera asset, 'user', i.e. the artist who created the camera, 'path', i.e. the location on disk of the camera file/folder, or 'approval', i.e. the name of the department authorized to use this camera. In the following table, an array of assets is presented to illustrate whether they match the Tag or not. 'camera1' does not sync because its context is not the job 'foo', while 'videoCamera' does not sync because its type is 'model' and not 'camera'.

| job | scene | shot | category | asset_type | name | user | path | approval | match |
|---|---|---|---|---|---|---|---|---|---|
| foo | AB | AB001 | package | camera | renderCamera | john-doe | /file1 | animation | YES |
| bar | CT | CT010 | package | camera | camera1 | john-doe | /file2 | comp | NO |
| foo | AB | AB002 | package | model | videoCamera | alice-n | /file3 | | NO |
| foo | AC | AC001 | package | camera | testCamera | john-doe | /file4 | | YES |

In the following an example is given where an asset matches multiple tags and the actions need to be resolved. In this example, there are three tags in the configuration:

| Context | Attributes | Action |
|---|---|---|
| job=foo | category=package:asset_type=CameraPkg | sync_to=location1,location2 |
| job=foo:scene=build | category=package | sync_to=location1 |
| job=foo | category=package:name=light* | block=location2 |

All three of them would match the following asset:

| job | scene | shot | category | asset_type | name | user | path | approval |
|---|---|---|---|---|---|---|---|---|
| foo | build | hero | package | CameraPkg | lightTestCam | john-doe | /filel | |

As a result, the decision engine needs to resolve the three actions 'sync to location 1 and 2', 'sync to location 1', and 'block location 2'.

In the present case, the decision engine implementation dictates that 'sync to location 1 and 2' and 'sync to location 1' resolve in a simple instruction to 'sync to location 1 and 2', but then, 'block location 2' overrides any 'sync to' instruction, so the final result is 'sync to location 1'.

## Claims

1. A method for handling digital assets, the method **comprising:**
- analyzing (10) a digital asset to determine context and attributes of the digital asset;
- comparing (11) the determined context and attributes with tags, the tags comprising information on context, attributes, and actions; and
- in case the context and an attribute of the digital asset match (12) the context and an attribute of a tag, performing (13) an action on the digital asset specified by the tag.

2. The method according to claim 1, **wherein** the action comprises providing a digital asset to a local or remote destination or blocking transmission of a digital asset to a local or remote destination.

3. The method according to claim 1 or 2, **wherein** the context represents a project and comprises one or more descriptors for the project.

4. The method according to claim 3, **wherein** the project is a film project or a software project.

5. The method according to one of the preceding claims, **wherein** the attributes comprise information about at least one of category of the asset, type of the asset, creator of the asset, storage location of the asset, and authorized user of the asset.

6. The method according to one of the preceding claims, **wherein** the digital assets include at least one of video data, scene models, object surface property data, motion data of scene components, and software components.

7. An apparatus (20) configured to handle digital assets, the apparatus (20) **comprising:**
- an asset analyzer (22) configured to analyze (10) a digital asset to determine context and attributes of the digital asset;
- a comparator (23) configured to compare (11) the determined context and attributes with tags, the tags comprising information on context, attributes, and actions; and
- an action unit (24) configured to perform (13) an action on the digital asset specified by the tag in case the context and an attribute of the digital asset match (12) the context and an attribute of a tag.

8. A computer readable storage medium having stored therein instructions enabling handling digital assets, which when executed by a computer, cause the computer to:
- analyze (10) a digital asset to determine context and attributes of the digital asset;
- compare (11) the determined context and attributes with tags, the tags comprising information on context, attributes, and actions; and
- in case the context and an attribute of the digital asset match (12) the context and an attribute of a tag, perform (13) an action on the digital asset specified by the tag.
